(19)

**Europäisches Patentamt**

**European Patent Office**

**Office européen des brevets**

(11)  **EP 4 247 019 B1**

(12)  **EUROPEAN PATENT SPECIFICATION**

(45) Date of publication and mention
of the grant of the patent:
**14.08.2024 Bulletin 2024/33**

(21) Application number: **22305316.6**

(22) Date of filing: **17.03.2022**

(51) International Patent Classification (IPC):
**H04W 4/44** (2018.01)    **H04W 72/04** (2023.01)

(52) Cooperative Patent Classification (CPC):
**H04W 4/44; H04L 47/11; H04L 47/127;
H04W 28/0289;** H04W 72/52; H04W 84/005

(54) **METHOD AND SYSTEM FOR CONTROLLING CONGESTION OF A PRIVATE TRAIN NETWORK**

VERFAHREN UND SYSTEM ZUR STEUERUNG DER ÜBERLASTUNG EINES PRIVATEN ZUGNETZES

PROCÉDÉ ET SYSTÈME DE CONTRÔLE DE CONGESTION D'UN RÉSEAU PRIVÉ DE TRAIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.09.2023 Bulletin 2023/38**

(73) Proprietors:
• **Mitsubishi Electric R&D Centre Europe B.V.
1119 NS Schiphol Rijk Amsterdam (NL)**
Designated Contracting States:
**FR**
• **Mitsubishi Electric Corporation
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **LI, Qianrui
35708 RENNES CEDEX 7 (FR)**
• **BONNEVILLE, Hervé
35708 RENNES CEDEX 7 (FR)**

(74) Representative: **Plasseraud IP
104 Rue de Richelieu
CS92104
75080 Paris Cedex 02 (FR)**

(56) References cited:
**EP-A1- 3 439 416    US-A1- 2020 359 257**

• **RAPPORTEUR: "Draft - RTS/ITS-00363 v1.1.3 (TS
102 636-4-2 ) Geonetworking; media-dependent
ITS-G5", vol. WG ITS WG3 Transport and
Network, no. 1.1.3, 10 July 2019 (2019-07-10),
pages 1 - 26, XP014349213, Retrieved from the
Internet
<URL:docbox.etsi.org/ITS/ITSWG3/05-CONTRIB
UTIONS/2019/ITSWG3(19)047004_Draft_-_RTS_I
TS-00363__v1_1_3__TS_102_636-4-2____Geone
tworki/ITS-00363v113.doc> [retrieved on
20190710]**

**Description**

FIELD OF INVENTION

The present invention relates to control of congestion in a network, especially to a method and a system for the control of congestion of a private train network.

BACKGROUND

In next generation railway communication system, different dedicated railway applications have been envisaged and both train-to-infrastructure (T2I) and train-to-train (T2T) links will be used to convey packets for those applications. For the T2I and T2T communications, different radio access technologies such as Wi-Fi, Long Term Evolution (LTE), 5G and satellite could be used. Among these technologies, 5G NR V2X based sidelink communication technology is likely to be one very promising candidate for both T2I and T2T communications because it can provide rather good performance in a distributed communication scenario.

In a distributed scenario such as 5G NR sidelink communication in mode 2, a very important issue is the congestion control. Congestion control is a mechanism to regulate the entry of data packets into the network and manage the shared resource in an effective and fair manner to avoid congestive collapse. In 5G NR V2X mode 2, a Decentralized Congestion Control (DCC) scheme can be applied. Rather than defining a specific particular congestion control algorithm, in the standard it defines the related metrics and possible countermeasures to reduce the channel congestion. These metrics are the Channel Busy Ratio (CBR) and the Channel occupancy Ratio (CR) that are referred to in Rel. 16 as sidelink (SL) CBR and SL CR. CBR is the view of a particular TX UE on number of occupied sub-channels in a resource pool in a time window. A sub-channel is considered occupied if the measured RSSI exceeds a (pre-)configured threshold. CR is the view of a particular TX UE on the number of sub-channels that this TX UE utilizes or selects in a time window. By definition, the CR pertains to each of the TX UE and reflects the amount of resource that this UE has occupied in the shared resource pool. A TX UE uses the measured SL CBR and SL CR to identify whether it needs to modify its transmission parameters to reduce the channel load. This is done using a (pre-)configured lookup table that includes up to 16 CBR ranges. Each range is linked with a maximum SL CR ($CR_{limit}$) that the TX UE cannot surpass. $CR_{limit}$ increases as the CBR range decreases. 3GPP establishes that the value of the $CR_{limit}$ for each CBR range should be a function of the priority of the Transport Block (TB) and the absolute speed of the TX UE. The standard specifies that the TX UE evaluates whether it is exceeding the $CR_{limit}$ and has to modify its transmission parameters at each (re-)transmission.

TX UEs observe the evolution of their CR and the CBR of the shared resource, and they can take actions to limit their contribution to the occupancy of the shared resources and therefore limit the congestion in a distributed manner.

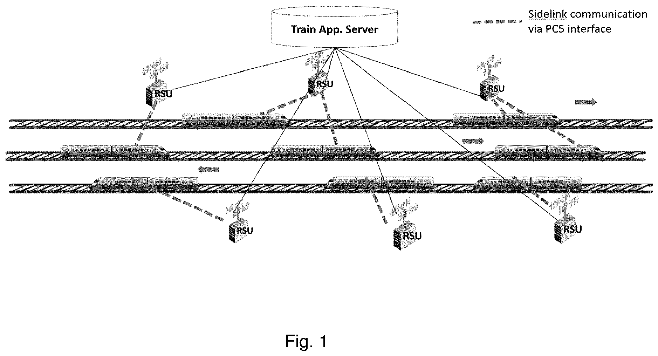

A system in the art of such a next generation railway communication network is illustrated in the Figure 1, and it comprises road side unit (RSU) deployment in the private train network, wherein the communication between the RSU and the train is based on the NR V2X sidelink mode 2. Under this mode, it is assumed that all the T2I communications share a common sidelink resource pool. For the communication data packets that should be transmitted from RSU to the targeted train, each of the RSU is in charge of the congestion control with the DCC mechanism. In addition, usually, the private train network is deployed and managed by a train operator aiming to provide dedicated railway applications, and thus normally there is an application server which provides each RSU the higher layer information regarding the railway applications. This application server is a central node which is connected to each of the RSU, as is shown in Figure 1.

As mentioned, in the state-of-the-art, the railway communication in the above mentioned private train network from RSU to the train is based on NR V2X sidelink mode 2, as shown in Figure 1, the congestion control is based on DCC implemented at each RSU. It is further assumed that the RSUs in the scenarios share the same sidelink resource pool. Thus, with the DCC scheme, the congestion on the sidelink resource pool is controlled in a distributed manner.

However, on the one hand, from the private train network point of view, the DCC can be sub-optimal due to the fact that the DCC tries to limit the congestion impact of each RSU on the shared resource pool. The fairness is reflected by the maximum CR ($CR_{limit}$) that each RSU cannot surpass. On the other hand, from the overall system point of view, such DCC mechanism is sub-optimal. This is because in the railway communication scenario, the communication is not evenly distributed in either time or space. There will be T2I communication only when there are moving trains in the range of the RSU. Therefore, the connections and service traffic for the T2I communication can be bursty, i.e. with very big amount of traffic in a short period of time and then stay idle in the rest moment. Moreover, in the railway communication scenario, unlike in the V2X case, the number of trains is relatively small. Thus, one RSU may be in an almost congested situation with very high CR while another RSU is totally in an idle state with no trains to communicate to. In this case, a DCC scheme that independently controls individual CR behavior limits the entire system performance.

In addition, US20200359257 A1 discloses a V2X communication device and a DCC operation method thereof.

The invention aims to address these problems in the art to improve the overall system performance.

SUMMARY

The invention is defined by the claims.

In this regard, according to one aspect of the invention, it is provided a method for controlling congestion of a private train network, which comprises a plurality of road side units (RSU) deployed along railway tracks and each connected to an application server, wherein each of said plurality of road side units (RSU) is adapted to establish sidelink communications with at least one train based on a wireless network, for example based on sidelink communication in NR V2X mode 2 with PC5 interface, and is adapted to make independent Decentralized Congestion Control (DCC) decision, wherein the communications share a common sidelink resource pool, the method comprising:

- aggregating congestion control information from a subset of said a plurality of road side units (RSU) and railway application information by the application server;
- predicting congestion status of each of the subset of said a plurality of road side units (RSU) by the application server based on the aggregated congestion control information and the railway application information;
- calculating and providing assistance information to the subset of said a plurality of road side units (RSU) by the application server based on the predicted congestion status; and
- performing Decentralized Congestion Control (DCC) by the subset of said a plurality of road side units (RSU) based on the assistance information.

Different from the solutions in the art, the present invention proposes to creatively use the application server which connects to all the RSUs and has all the necessary railway application information in the private train network. Wish such an arrangement, it can help to enhance the congestion control performance in the overall private train network by aggregating congestion control related information from multiple RSUs, predicting the congestion control performance in the upcoming moments by taking into account the aggregated congestion control information per RSU as well as the railway application information in the application server, and providing assistance information to RSU to coordinate the DCC at multiple RSUs. Therefore, the method according to the present invention improves the overall system performance.

Furthermore, when the communications in wireless network is based on sidelink communication in NR V2X mode 2 with PC5 interface, the congestion control information is sidelink Channel Busy Ratio (SL CBR) and/or sidelink Channel occupancy Ratio (SL CR).

Advantageously, the predicted congestion status comprises prediction of sidelink Channel Busy Ratio (SL CBR) and/or sidelink Channel occupancy Ratio (SL CR) for the subset of said a plurality of road side units (RSU).

Optionally, the sidelink Channel occupancy Ratio is calculated based on a sliding window comprising 1000 slots or $1000 \cdot 2^{\mu}$ slots, and the sidelink Channel Busy Ratio is calculated based on a sliding window comprising 100 slots or $100 \cdot 2^{\mu}$ slots, wherein $\mu$ is a parameter for numerology with values in the following table:

| $\mu$ | subcarrier spacing $\Delta f = 15 * 2^{\mu}$ kHz |
|---|---|
| 0 | 15 |
| 1 | 30 |
| 2 | 60 |
| 3 | 120 |
| 4 | 240 |

Advantageously, the subset of said a plurality of road side units (RSU) are chosen based on their signal power and/or geographic distance. For example, a possibility is that a train can measure the received signal level from different RSUs and only retains a limited subset (for example, 2 RSUs with the largest received power). Another possibility is that if the RSUs and the trains are equipped with a GNSS and are able to obtain positioning information, the train can calculate the distance to each of the RSUs and retains a limited subset of the nearest RSUs.

Advantageously, the railway application information is high layer information comprising:

- traffic characteristics of service flows which are sent from the road side units (RSU) to the at least on train, such as packet delay budget, packet size, periodicity of the traffic, guaranteed flow bit rate, maximum flow bit rate, packet error rate, and/or priority level;

- position information of the at least one train, such as the instantaneous position and/or speed of the train; and/or

- position-based channel condition fingerprint database.

Advantageously, the assistance information relates to:

- assisted transmission parameter modification for the subset of said a plurality of road side units (RSU);

- assisted congestion parameter modification for the subset of said a plurality of road side units (RSU);

- assisted sidelink dual connectivity; and/or

- assisted sidelink unicast link management.

Advantageously, before the step of aggregating congestion control information, the method further comprises:

- selecting the subset of said a plurality of road side units (RSU);

- calculating the congestion control information by the subset of said a plurality of road side units (RSU) and reporting the same to the application server.

Advantageously, the assistance information comprises a time stamp, and the road side units (RSU) ignore the assistance information if the time stamp is outdated.
Advantageously, the method further comprises providing the assistance information to the at least one train.
Advantageously, the common sidelink resource pool is a resource pool of sidelink channel in both time and frequency domain.
According to another aspect of the invention, it is provided a computer program comprising instructions which, when the program is executed by a computer, cause the computer to carry out the abovementioned method.
According to yet another aspect of the invention, it is provided a system for controlling congestion of a private train network, which comprises a plurality of road side units deployed along railway tracks and each connected to an application server, wherein each of said plurality of road side units is adapted to establish communications with at least one train based on a wireless network and is adapted to make independent Decentralized Congestion Control decision, wherein the communications share a common sidelink resource pool, the system comprising:

- aggregation unit for aggregating congestion control information from a subset of said a plurality of road side and railway application information by the application server;

- prediction unit for predicting congestion status of each of the subset of said a plurality of road side units by the application server based on the aggregated congestion control information and the railway application information;

- calculation unit for calculating and providing assistance information to the subset of said a plurality of road side units by the application server based on the predicted congestion status;

wherein the subset of said a plurality of road side units (RSU) are configured to perform Decentralized Congestion Control based on the assistance information.
Therefore, in the present invention, it relates to a communication infrastructure to train (RSU to train) using sidelink communication (such as PC5 interface), based on wireless communication technology, such as 5G NR V2X sidelink communication mode 2, where each of the communication entities (RSU or trains) manage their pairs of communication in a decentralized manner, meaning there does not exist a central node such as a base station, which will manage the communication and resource allocation for all pairs of RSU to train communication. On the contrary, each pair manages their own communication in a decentralized and independent manner. While the communication is managed in a decentralized manner, a very important constraint is that the resources that those communications utilize are a shared resource (sidelink resource pool) among all the communication pairs. Since each of the nodes are making independent communication decisions and they are working on shared resources, there is potentially a problem of collision because they are not aware of the decision made by others. In the state of the art, to reduce this effect, a decentralized congestion control algorithm has been proposed. In this scheme, there are two parameters that each node shall measure: the CR and CBR. There are also some preconfigured thresholds for the decision making in the DCC, which means that each node will continuously evaluate the CR and CBR and compare them to the threshold and decide what to do for the congestion control, such as drop the transmission, drop the retransmission, modify the transmission/retransmission parameters etc. As mentioned above, the traditional DCC method is not efficient in the private train network. To solve the problem, the present invention proposes a dynamic algorithm to estimate and configure the DCC parameters (threshold, transmission/retransmission parameters, etc) by virtue of the application server but still in a decentralized manner such that the DCC algorithm can work better to improve the congestion control for a private train network.

BRIEF DESCRIPTION OF THE DRAWINGS

Other features and advantages of the present invention will appear in the description hereinafter, in reference to the appended drawings, where:

Figure 1 illustrates Private train network with Application server connected to RSUs.

Figure 2 is a flowchart illustrating an exemplary method of coordinated decentralized congestion control with application server assistance according the present invention.

Figure 3 show a sliding window of 1000 slots for CR calculation.

Figure 4 shows CR prediction in time instance $t + \Delta t$.

Figures 5A to 5C show a first example of generating assistance information wherein the application server provides assistance information to modify the transmission parameters for upcoming services/traffic.

Figures 6A to 6C show a second example of generating assistance information wherein the application server provides assistance information to modify the congestion parameters for upcoming services/traffic.

Figures 7A and 7B show a third example of generating assistance information wherein the application server provides assistance information to maintain dual connectivity.

Figures 8A and 8B show a fourth example of generating assistance information wherein the application server provides assistance information to select and establish unicast sidelink.

DESCRIPTION OF EMBODIMENTS

Figure 1 shows an exemplary setting of a private train network, comprises a plurality of road side units RSU deployed along railway tracks T1, T2, T3 and each connected to an application server AS. Each of said plurality of road side units RSU is adapted to establish sidelink communications with at least one train based on a wireless network and is adapted to make independent Decentralized Congestion Control (DCC) decision, wherein the communications share a common sidelink resource pool.

In this embodiment, the communications in wireless network is based on sidelink communication in NR V2X mode 2 with PC5 interface, where there are no base station involved and all the nodes (RSU, train) organize their communication in a decentralized manner, without the involvement of a base station.

Moreover, the application server AS is configured to provide/gather the train application data. It also has high layer information regarding the train application, such as the application's characteristics of traffic (the payload, the periodicity, if the traffic is bursty or not, etc.), the QoS of the traffic (the priority, the packet delay budget, the average/peak data rate, the packet error rate), the instantaneous position of the trains, the instantaneous speed of the trains. It should be noted that, in the present invention, the application server only aggregates (transmit/receive) the application data and it is not the node that controls the communication between the application server and the trains, so the application server AS is not a central node (like a base station) controlling the communication.

In addition, the application server AS is arranged so that the train applications reside. Usually, there are basically 3 categories of train applications: critical, performance and business applications. Example of Critical communication applications are Automatic train control, Automatic train operation, Automatic train protection. Example of Performance communication applications are Voice Communication for operational purposes, CCTV communication service for surveillance cameras, Train coupling. Example of Business communication applications are on board WiFi, Wireless internet for passengers on platforms.

Moreover, the sidelink (channels) resource pool is in both time and frequency domain for the D2D (train to infrastructure) communication. When a transmission node (a RSU for example) want to communicate to a reception node (a train for example), it needs to find a sidelink channel (for example, a resource grid in frequency and time) which will be used for the communication. The resource pool contains all the available sidelink channels. Since in the NR V2X sidelink mode 2 based communication scheme, each transmission node performs the transmission in a decentralized manner, i.e. without a central node for the resource allocation, each transmission node will have to check each sidelink channel (each resource grid) to see if it is available (not occupied) and select/reserve it for communication if so. Since each of the transmission node is doing this, a collision might happen if two transmission nodes accidentally take the same sidelink resource. Another phenomenon is that if there is no congestion control, for example the transmitters are dumping too many packets at certain moment and almost all the sidelink channel resources are taken, which lead to the fact that some high priority packets arrive later cannot be transmitted due to no available sidelink channel, another example is that one transmission node might take too much resource and there is only very few left for other transmitter.

As already mentioned, the DCC is used for the congestion control for NR V2X mode 2 based sidelink communication. The DCC can limit the congestion impact of each node and provide congestion level convergence in the system. However, it per se cannot optimize the overall system performance, since it is a decentralized scheme and each node makes independent DCC decision.

The present invention is based on the abovementioned network configuration, and it further proposes a private train network with the application server AS connecting to all the RSUs and aware of railway application information (train position, movement predictions....), and thus it is possible to coordinate DCC at each RSU and provide assistance information to each RSU for DCC enhancement.

In particular, the present invention proposes a coordinated DCC with application server assistance for a private train network, which comprises congestion control information aggregation at the application server, application server congestion prediction for each RSU based on aggregated congestion control information per RSU as well as the railway application information, and application server providing assistance information to RSU for the DCC improvement.

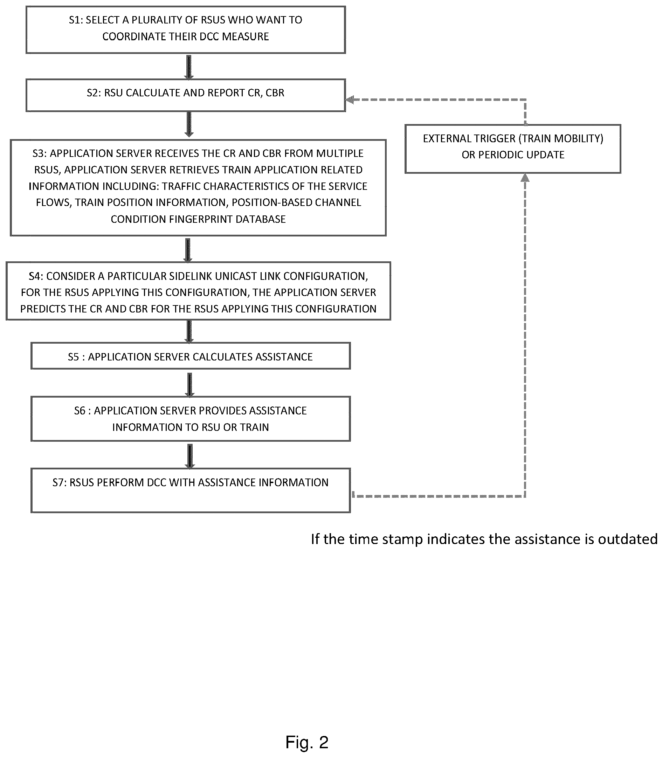

The detailed steps of an exemplary method for controlling congestion of a private train network according to the present invention are shown in Figure 2 and are described as follows:

Optionally, in step S1, a subset of a plurality of road side units RSU are selected, wherein the subset of RUS are the ones that are going to coordinate their DDC measure. The condition to choose the subset of the RSUs can be for example, based on the received signal power. For example, the train can measure the received signal level from different RSUs and only retains a limited subset (for example, two RSUs with the largest received power). Another possibility can be geographic distance, if the RSUs and the trains are equipped with a GNSS and are able to obtain positioning information, the train can calculate the distance to each of the RSUs and retains a limited subset of the nearest RSUs. It is noted that this is not a necessary step in the present invention, as the subset of the road side units RSU can be predetermined according to the conditions as mentioned above or other preset rules.

In the next step S2, the subset of a plurality of road side units RSU calculate and report sidelink (SL) Channel Busy Ratio CBR and the SL Channel occupancy Ratio CR.

In particular, these two metrics SL CBR and SL CR are used for the DCC in 5G NR V2X mode 2 for sidelink communication. In NR V2X, the SL CBR is the Number of busy (energy>threshold) sub-channels in a resource pool in a time window of 100 slots (any numerology) or $100 \cdot 2^{\mu}$ slots by (pre-)configuration per resource pool, where $\mu$ is the SCS configuration factor. The CR is the number of sub-channels that the TX UE utilizes or selects in a time window of 1000 slots (any numerology) or $1000 \cdot 2^{\mu}$ slots by (pre-)configuration per resource pool, where $\mu$ is the SCS configuration factor. A TX UE uses the measured SL CBR and SL CR to identify whether it has to modify its transmission parameters to reduce the channel load. This is done using either a (pre-)configured lookup table that includes up to 16 CBR ranges or configured via high layer parameters (*sl-CBR-RangeConfigList*, *sl-CR-Limit*). Each range is linked with a maximum SL CR ($CR_{limit}$) that the TX UE cannot surpass. With the CBR the TX UE observed and the look up table for the CBR ranges, the TX UE can deduce the $CR_{limit}$ that the TX UE cannot surpass, and the TX UE will further ensure the following limits for any priority value k If a UE transmits PSSCH in slot *n*:

$$\sum_{i \ge k} CR(i) \le CR_{Limit}(k)$$

where *CR(i)* is the CR evaluated in slot *n-N* for the PSSCH transmissions with '*Priority*' field in the SCI set to *i*, and $CR_{Limit}(k)$ corresponds to the high layer parameter *sl-CR-Limit* that is associated with the priority value *k* and the CBR range which includes the CBR measured in slot *n-N*, where *N* is the congestion control processing time. The congestion control processing time *N* is based on $\mu$ of Table 1 and Table 2 for UE processing capability 1 and 2 respectively, where $\mu$ corresponds to the subcarrier spacing of the sidelink channel with which the PSSCH is to be transmitted. A UE shall only apply a single processing time capability in sidelink congestion control.

Table 1

| μ | Congestion control processing time N [slots] |
|---|---|
| 0 | 2 |
| 1 | 2 |
| 2 | 4 |
| 3 | 8 |

Table 2

| μ | Congestion control processing time N [slots] |
|---|---|
| 0 | 2 |
| 1 | 4 |
| 2 | 8 |
| 3 | 16 |

It is up to UE implementation how to meet the above limits, including dropping the transmissions in slot *n*. A TX UE has to modify its transmission parameters if the SL CR exceeds the $CR_{limit}$. The objective is to reduce the SL CR and control the channel load generated by a TX UE.

In a following step S3, the application server receives current SL CR and SL CBR from each of a subset of said a plurality of road side units RSU periodically or on demand.

It should be noticed that the present invention is different from a traditional centralized congestion control scheme in the art where a central node will aggregate the CR for all nodes in the network and make the congestion control decision for all the nodes.

On the contrary, in the present invention, instead of all the RSUs, only a subset of RSUs are obliged to send its CR and CBR to the application server, which means the coordination DCC can be local, in the sense that the application server can only aggregate a few RSUs which is a subset of all the RSUs in the network.

In addition, in the centralized congestion control in the art, it is the central node who controls the channel load, and the central node will demand each RSU to report its measured CBR periodically or on demand. The performance of the algorithm depends on the accuracy of the feedback of the per RSU CBR report. This means that the centralized decision is more accurate if the decision made on the central node is based on the reported per RSU CBR which reflects well the instantaneous CBR of each RSU. In this case, a frequent signaling of the CBR report from each of the RSU is needed and the backhauling between the RSUs and the central node should be good enough to support such frequent reports.

However, in the present invention, it better adapts to the limited backhauling between RSUs and the application server. The periodicity of the (CBR, CR) reports can be adjusted according to the backhaul constraint, and the application server only coordinate the DCC with the RSUs who make report.

Moreover, the congestion control according to the present invention is always based on DCC, which means that it is always the individual RSU who makes the DCC decision. The application server merely provides to the RSUs assistance information which it thinks might help the corresponding RSU. In the present invention, it is up to the RSU to decide whether he will take into account the assistance information for its DCC procedure or not (to be explained in the following steps). For example, an RSU can ignore the assistance information from the application server simply because it finds that the assistance information from the application server is calculated based on an outdated report and therefore is not quite relevant to the current situation at the RSU.

Moreover, in the Step S3, in addition to receiving CR and CBR from the subset of the RSU, the application server AS further retrieves train application related information including traffic characteristics of the service flows, train position information, position-based channel condition fingerprint database.

Based on the aggregated congestion control information and the railway application information, in a following step S4, the application server AS predicts congestion status of each of the subset in the upcoming moment.

In particular, in this step S4, after considering a particular sidelink unicast link configuration, for the RSUs applying this configuration, the application server predicts the CR and CBR for the RSUs applying this configuration.

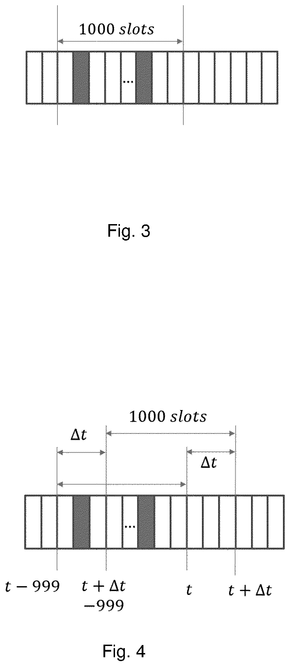

For the SL CR prediction, as mentioned above, the SL CR calculation are based on a sliding window. As is illustrated in Figure 3, for ease of explanation, the CR is calculated with a sliding window of 1000 slots.

Once the application server AS received a CR report from an RSU, it can predict this RSU's CR in the upcoming moments by taking into account the received CR as well as the railway application information in the application server. Assume the application received a CR report from an RSU in time instance $t$ and wants to predict the CR for this RSU in time instance $t + \Delta t$ slots. Figure 4 shows the CR prediction at application server for RSU in time instance $t + \Delta t$.

Since the CR is calculated with a sliding window, the channel occupancy during $[t + \Delta t - 999, t]$ will not change. In order to predict CR in time instance $t + \Delta t$, we only need to estimate i) the channel occupancy $N_{\Delta t_p}$ during the past moment $[t - 999, t + \Delta t - 999]$, and ii) the channel occupancy $N_{\Delta t_u}$ during the upcoming moment $[t, t + \Delta t]$, which can be denoted as:

$$CR_{t+\Delta t} = \frac{CR_t * 1000 - N_{\Delta t_p} + N_{\Delta t_u}}{1000}$$

In order to estimate $N_{\Delta t_p}$ and $N_{\Delta t_u}$, railway application information at the application server is needed. For example, the railway application information here includes the following three types of information:

1. Traffic characteristics of the service flows which are sent from RSU to train, including at least the packet delay budget, the packet size, the periodicity of the traffic (aperiodic or periodic traffic, if it is periodic, the periodicity of the traffic), the priority level.

2. Position information of all the trains in the scenario, including the instantaneous train position and speed of the trains.

3. Position-based channel condition fingerprint database which indicates the channel condition for a communication between a given train position and a selected RSU. This fingerprint data base can be constructed based on history sidelink measurement report received at each RSU or it can be based on a simple link budget calculation with path loss calculated with the position information mentioned above.

To estimate $N_{\Delta t_p}$ and $N_{\Delta t_u}$, it is possible to first anticipate the communication status between the upcoming duration $\Delta t$ and the passed duration $\Delta t$. In another word, it needs to check if any communication between this RSU and the trains between $[t - 999, t + \Delta t - 999]$ will be interrupted due to the train mobility at $[t, t + \Delta t]$. It is will also need to check if any new train will come to the vicinity of the RSU during $[t, t + \Delta t]$ and require this RSU to send flows to the new train.

If the RSU will still maintain a communication with a train, and if the traffic that is dedicated to the train is periodic (NR V2X mode 2 Semi Persistant Scheduling), it will be assumed that the transmission from the RSU to the train during $[t, t + \Delta t]$ will select and utilize the same number of subchannels as it had during $[t - 999, t + \Delta t - 999]$. In this case, there is no impact on $N_{\Delta t_p}$ and $N_{\Delta t_u}$.

If the RSU will still maintain a communication with a train, and if the traffic is aperiodic (NR V2X mode 2 dynamic scheduling), with the traffic characteristics it is possible to separately estimate the number of subchannels that had been (will be) selected or utilized between RSU and the train during $[t - 999, t + \Delta t - 999]$ ($[t, t + \Delta t]$), respectively. The previous subchannel occupancies will be subtracted and the later should be added into the $[t, t + \Delta t]$ channel occupancy. Therefore, the influence of the train who maintains a communication with the RSU in upcoming $\Delta t$ instance is calculated.

If the RSU will not maintain a communication with a train anymore due to the radio link failure, i.e., the radio condition between the RSU and the moving train is under certain threshold and the link has been cut (two modes are possible: application server can either anticipate the RLF with the train position and the position-based channel condition fingerprint database, or the application server is informed by a RLF feedback from the train or RSU who detect the RLF). With the traffic characteristics, it is possible to estimate the number of subchannels that had been selected or utilized between RSU and the train during $[t - 999, t + \Delta t - 999]$, this should be subtracted in the channel occupancies in CR prediction as these channel occupancies will not appear during $[t, t + \Delta t]$.

According to the railway application information at the application server AS, if the RSU will potentially have new coming trains to serve during $[t, t + \Delta t]$, such event can be predicted with the train position information and the position-based channel condition fingerprint database. With the traffic characteristics of the incoming train, the subchannel occupancy for the RSU serving the train can be estimated and this should be added into the channel occupancies in CR prediction during $[t, t + \Delta t]$.

For the SL CBR prediction, since CBR is calculated as the number of busy (energy>threshold) sub-channels in a resource pool in a time window as perceived by each RSU, the mobility of each train as well as the subchannel resource selection of each sidelink communication in the duration $[t, t + \Delta t]$ will both have an effect on the CBR measured at each RSU, thus makes the CBR prediction rather difficult. However, it is still possible to perform such prediction, with at least one of the following three methods:

1. Extrapolate CBR measured at each RSU with history periodic report available at the application server.

2. Since the train trajectories are scheduled in advance and they are likely to repeat over time (train traffic timetables), a fingerprint database for each RSU's measured CBR in time could be constructed at the application server with previous report. The CBR measured in the upcoming instance $t + \Delta t$ can be estimated by search a similar situation in the history in the fingerprint database.

3. Assuming that the private train network is an isolated system, i.e., there is no interference from other system, the application server can predict the channel selection and utilization for each RSU in the upcoming instance $t + \Delta t$ as it is described in above, with the channel occupancy prediction for all RSUs, the position information of the fixed RSU as well as position of each train at instance $t + \Delta t$, and the position-based channel condition fingerprint database, each RSU's measured CBR can be estimated at the application server.

Once the application server AS has made the CR, CBR prediction for the subset of the RSUs, it can use these global views of the entire system to generate assistance information for RSU to improve the DCC procedure in step S5. The assistance information can have various forms, some examples are given below.

Example I of Assistance Information, Application Server Assisted Transmission Parameter Modification

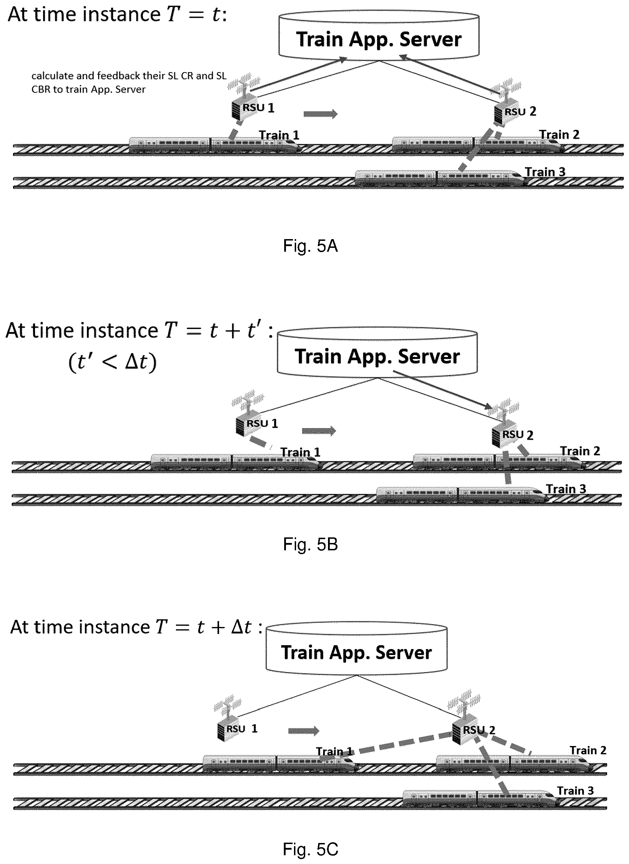

The assistance information can be a suggestion for the RSU to modify its transmission parameters so as to let the almost congested RSU to be able to serve a new coming train. In a particular embodiment as is shown in Figures 5A to 5C, an application server AS is coordinating two RSUs, RSU1 and RSU2. The application server AS has aggregated CR and CBR information for each RSU at time instance $t$ and predict the CR, CBR for RSU1 and RSU2 at time instance $t + \Delta t$. The application has estimated that the moving train will have a radio link failure on the RSU1 to train link at time instance $t + \Delta t$ and the RSU2 is supposed to take over and transmit to the train.

Based on the CR, CBR prediction for RSU2 at time instance $t + \Delta t$ , the application server notices that RSU2 will be slightly congested and may not be able to serve the upcoming train if no modification on transmission parameters is made. Therefore, to allow the RSU2 to serve the upcoming train, the application server send an assistance information to RSU2 before time instance $t + \Delta t$, suggesting him for example to use higher modulation and coding scheme (MCS) in its current transmission. This will lead to a CR decrease at the RSU2 at time instance $t + \Delta t$ when the train arrives. In this way, the RSU is able to transmit to the train.

For example, as shown in Figure 5A, at time instance $T=t$, RSU1 is communicating to train1, RSU2 is communicating to train 2 and train 3. RSU1 and RSU2 will calculate and feedback their SL CR and SL CBR at time instance $T=t$ to train App. Server.

The train application server AS can predict that train 1 will communicate to RSU2 in future time instance $T=t+\Delta t$, this prediction can be based on either (1) instantaneous train 1 position information, the train speed information and a distance based RSU selection criterion, or (2) instantaneous train 1 position information, the train speed information, position-based channel condition fingerprint database, and a receive power based RSU selection criterion.

The train application server AS can predict the SL CR and SL CBR at time instance $T=t+\Delta t$ for RSU2. This prediction is based on traffic characteristics of the communication flows for RSU2 to trains 1, 2, and 3, position information for train 1, 2 and 3, and position-based channel condition fingerprint database.

With the predicted the SL CR and SL CBR at time instance $T=t+\Delta t$ for RSU2, the train App. Server may find out that the RSU2 cannot serve the three trains with the current configuration for communication flows between RSU2 to train1, 2, and 3. This can simple because with such configuration the SL CR at $T=t+\Delta t$ will surpass the $CR_{limit}$ at RSU2.

In the following steps, as shown in Figure 5B, at time instance $T=t+t'$ , the train application sever AS will send an assistance information to RSU2, for example suggesting RSU2 to use higher modulation and coding scheme (MCS) in its current transmission to train2 and train 3. In this way, if RSU2 applies the proposed configuration, the congestion level at RSU2 will be decreased and it is possible to serve all three trains at instance $T=t+\Delta t$.

RSU2 accepts and applies the MCS configuration parameters from the train App. Server and the SL CR at RSU2 starts to improve.

Accordingly, as shown in Figure 5C, at time instance $T=t+\Delta t$, apart from the previous existing communication between RSU2 and train 2 and train 3, RSU2 will in addition start to communicate to train 1.

With the current MCS configuration parameters, RSU2 finds out that it is able to serve all three trains without congestion (the SL CR at current instance $T=t+\Delta t$ will not surpass the CRiimit at RSU2).

Example II of Assistance Information. Application Server Assisted Congestion Parameter Modification

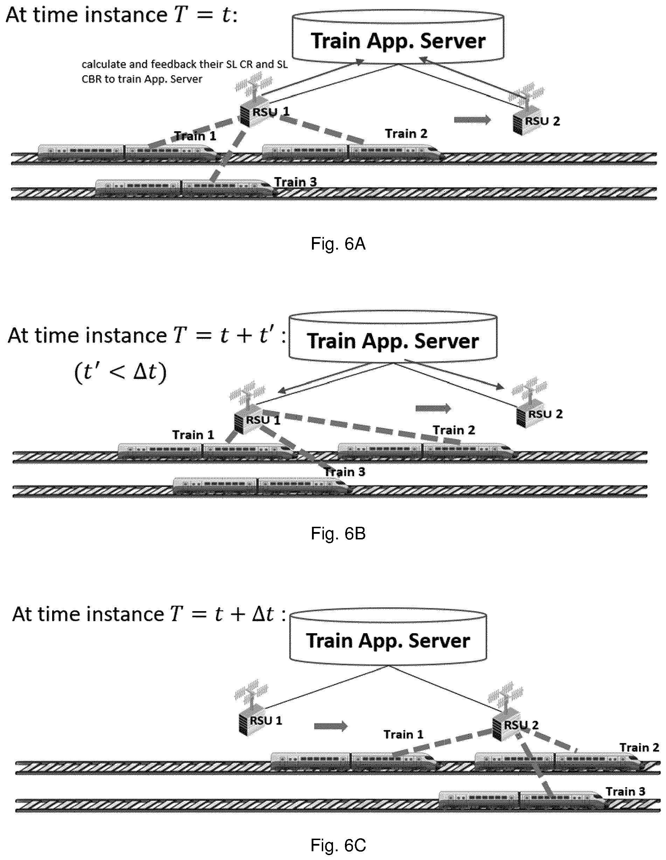

The assistance information can also be a suggestion for the RSU to modify its congestion parameters such as *sl-CR-Limit* to enhance the RSU's congestion status. In a particular embodiment as is shown in Figure 6, an application server AS is coordinating two RSUs. The application server has aggregated CR and CBR information for each RSU at time instance $t$ and predict the CR, CBR for RSU1 and RSU2 at time instance $t + \Delta t$.

Based on the CR, CBR prediction for RSU1, RSU2 at time instance $t + \Delta t$, the application server notices that RSU2 is likely to be congested because it will communicate to many upcoming trains, and RSU1 will be idle with no communication. Therefore, to allow the RSU2 to serve the upcoming trains, the application server send an assistance information to RSU2 before time instance $t + \Delta t$, suggesting him for example to modify its congestion parameter $CR_{limit}$ using high layer configuration parameter *sl-CR-Limit*. This will allow RSU2 at time instance $t + \Delta t$ to select and utilize more channels for the upcoming trains, with limited impact on RSU1 since it has no (or limited) transmission load.

For example, as shown in Figure 6A, Initially, both $CR_{limit}$ at RSU1 and SRU2 are configured for example as 0.0008 when CBR>0.8, so as to achieve certain fairness between RSU1 and RSU2

At time instance $T=t$, RSU1 is communicating to three trains: Train1, Train 2 and Train 3. RSU2 is idle. RSU1 will calculate and feedback their SL CR and SL CBR at time instance $T=t$ to train application server AS.

The train application server AS can predict that RSU2 will communicate to all three trains in future time instance $T=t+\Delta t$, while RSU1 will be idle then. This prediction can be based on either (1) instantaneous train position information, the train speed information and a distance based RSU selection criterion, or (2) instantaneous train position information, the train speed information, position-based channel condition fingerprint database, and a receive power based RSU selection criterion.

The train application server finds out that the initial equal $CR_{limit}$ configuration at RSU1 and RSU2 at time instance $T=t$ is not optimal for the upcoming time instance $T=t+t'$, because RSU2 will be flooded with multiple flows to communicate to multiple trains while RSU1 becomes idle. It might be better to set for example $CR_{limit}$ configuration at RSU2 as 0.0014 and $CR_{limit}$ configuration at RSU1 as 0.0002 which allows RSU2 to select and utilize more channels for the upcoming trains.

Next, as shown in Figure 6B, at time instance $T=t+t'$, the train application server AS will recommend congestion control parameter to RSU1 and RSU2, for example to modify the RSU1's and RSU2's CRiimit using higher layer parameter SL-CR-Limit at time instance $T=t+\Delta t$.

Accordingly, at time instance $T=t+\Delta t$, as shown in Figure 6C, RSU2 applies the configuration parameters from the train application server AS and then it can select and utilize more channels for communication to Train 1, Train 2 and Train 3.

Example III of Assistance Information, Application Server Assisted Sidelink Dual Connectivity

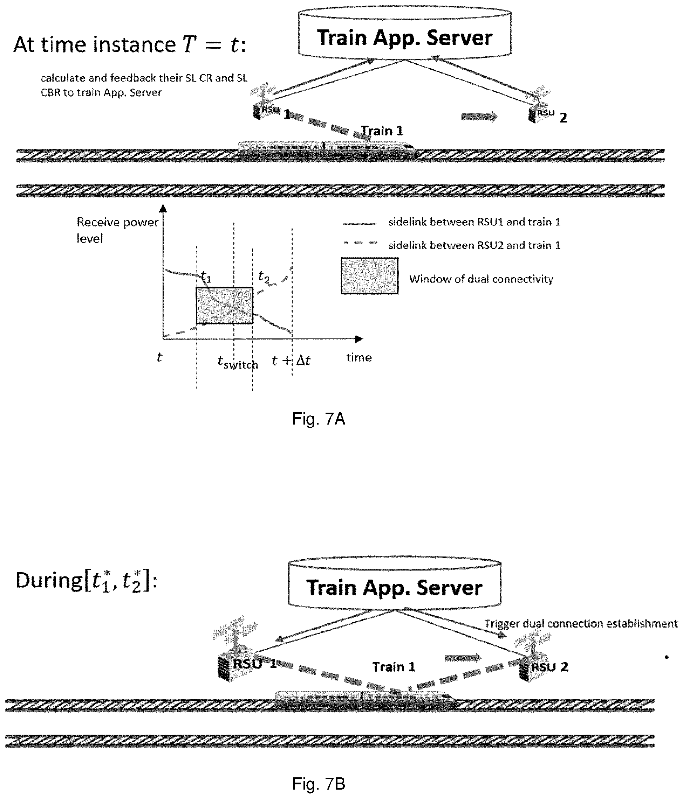

A third exemplary assistance information can be a suggestion to the RSU to establish a supplementary unicast link to a train and transmit to the train via this new sidelink. In a particular embodiment as is shown in Figure 7, an application server AS is coordinating two RSUs. The application server has aggregated CR and CBR information for each RSU at time instance $t$ and can predict the CR, CBR for RSU1 and RSU2 for all the upcoming moments between $[t, t + \Delta t]$, considering different transmission configurations. In another word, the application server can predict the CR, CBR performance for both RSU1 and RSU2 at any time instance $t < t' < t + \Delta t$. With one communication configuration example, the RSU1 communicates with the train during $[t, t']$, in another configuration RSU2 communicates with the train during $[t, t']$ or in another else configuration, both RSU1 and RSU2 will communicate with the train during $[t, t']$.

Based on the predictions associated with different communication configurations, the application server can recommend the transmission configuration, for example if RSU1 or RSU2 or dual connectivity is preferred for the communication to the train and the duration of the corresponding transmission.

For example, as shown in Figure 7A, at time instance $T = t$, RSU1 is communicating to train1, RSU1 and RSU2 will calculate and feedback their SL CR and SL CBR at time instance $T = t$ to train application server AS.

The train application server AS can predict that Train 1 will communicate to RSU2 in future time instance $T = t_{switch}$, this prediction can be based on either (1) instantaneous train 1 position information, the train speed information and a distance based RSU selection criterion, or (2) instantaneous train 1 position information, the train speed information, position-based channel condition fingerprint database, and a receive power based RSU selection criterion.

The train application server AS can predict how the SL CR and SL CBR will evolve during $[t, t + \Delta t]$ for both RSU1 and RSU2 if the sidelink release between RSU1 and train 1 and the sidelink establishment between RSU2 and train 1 happen at $t_{switch}$.

This prediction is based on traffic characteristics of the communication flow, position information, and position-based channel condition fingerprint database.

The train application server AS can also predict how the SL CR and SL CBR will evolve during $[t, t + \Delta t]$ for

both RSU1 and RSU2 if a dual connection (RSU1 to train1 and RSU2 to train 1) happens during a dual connectivity window $[t_1, t_2]$. This prediction is based on traffic characteristics of the communication flow, position information, and position-based channel condition fingerprint database.

Upon all possible values of the dual connectivity window $[t_1, t_2]$ configuration, together with the no dual connection case (switch sidelink at $T = t_{switch}$), the train application server AS can compare their performances of the congestion (i.e., how the SL CR and SL CBR will evolve during $[t, t + \Delta t]$ for both RSU1 and RSU2 if a particular dual connectivity window $[t_1, t_2]$ is applied), and select one configuration, for example, $[t_1^*, t_2^*]$, which is the optimal for the congestion evolution at RSU1 and RSU2.

During $[t_1^*, t_2^*]$, as shown in Figure 7B, the train application server AS sends assistance information to RSU1 and RSU2 to trigger the establishment of sidelink dual connection between RSU1-train1 and RSU2-train1.

Example IV of Assistance Information, Application Server Assisted Sidelink Unicast Link Management and Congestion Balancing

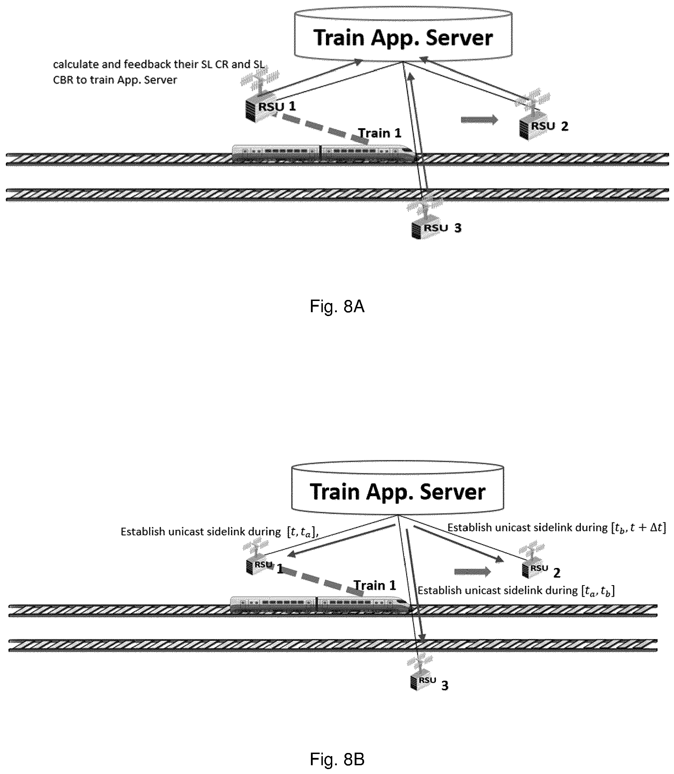

A fourth exemplary assistance information can be a recommendation to the RSU indicating that it should establish a unicast link with the train and perform sidelink communication, or a recommendation to the train indicating that it should better establish the next sidelink with a particular RSU. In a particular embodiment as is shown in Figures 8A and 8B, an application server is coordinating three RSUs. The application server has aggregated CR and CBR information for each RSU at time instance $t$ and predict the CR, CBR for RSU1, RSU2 and RSU3 at time instance $t + \Delta t$. The train which receives the packets from RSU1 will have a radio link failure at time instance $t < t_{RLF} < t + \Delta t$ and potentially receive communication from either RSU2 or RSU3 after the link failure. With the predicted CR, CBR at RSU2 and RSU3 for the time instance $t + \Delta t$, the application server can deduce, between RSU2 and RSU3, which should be the one selected to communicate to the train. This assistance information can be sent to the train via the RSU1 before the train leaves RSU1's range, to tell the train to establish a unicast link with RSU3. The assistance information can also be addressed to the RSU3, letting it to initiate the unicast link establishment to the train.

For example, as shown in Figures 8A and 8B, RSU1, RSU2 and RSU3 will calculate and feedback their SL CR and SL CBR at time instance $T = t$ to train application server AS.

For any given configuration $\pi$ of the unicast sidelink management: e.g., RSU1 communicates to train 1 during $[t, t_a]$, RSU3 communicates to train 1 during $[t_a, t_b]$, RSU2 communicates to train 1 during $[t_b, t + \Delta t]$, the train application server can predict how the SL CR and SL CBR will evolve during $[t, t + \Delta t]$ for all RSU1, RSU2 and RSU3 applying the aforementioned configuration $\pi$. This prediction is based on traffic characteristics of the communication flow, position information, and position-based channel condition fingerprint database.

As shown in Figure 8B, the train application server AS can use a utility function $f$ to select and establish unicast sidelink among the RSUs and trains. One example of the utility function at the application server can be a congestion balancing metric:

$$f = \min_{\pi} \max_{i=1,...,N} \mathrm{CR}^i_{t+\Delta t}(\pi)$$

, to minimize the maximal channel occupancy at all RSUs.

Another example congestion balancing metric can be:

$$f = \min_{\pi} \sum_{i=1}^{N} \mathrm{CR}^i_{t+\Delta t}(\pi)$$

, to minimize the overall channel occupancy for all coordinated RSUs.

where $\pi$ is a configuration of the unicast sidelink management between the RSUs and the train.

The aforementioned exemplary examples and scenario can be extended to a more complicate case where multiple RSUs and multiple train are presented. In this particular embodiment, the application server has aggregated CR and CBR information for each RSU at time instance $t$, knowing that there are unicast link failure and new unicast link establishment during $[t, t + \Delta t]$ due to mobility of the trains, the application can predict the CR, CBR for each RSU at time instance $t + \Delta t$ considering a particular new unicast link establish configuration. Then the application server can use a utility function $f(\mathrm{CR}^i_{t+\Delta t}(\pi), \mathrm{CBR}^i_{t+\Delta t}(\pi))$ to select and establish unicast sidelink among the RSUs and trains. One example of the utility function at the application server can be a congestion balancing metric:

$$f\left(\mathrm{CR}^i_{t+\Delta t}(\pi), \mathrm{CBR}^i_{t+\Delta t}(\pi)\right) = \min_{\pi} \max_{i=1,...,N} \mathrm{CR}^i_{t+\Delta t}(\pi)$$

, to minimize the maximal channel occupancy at all RSUs. Another example congestion balancing metric can be:

$$f\left(\mathrm{CR}^i_{t+\Delta t}(\pi), \mathrm{CBR}^i_{t+\Delta t}(\pi)\right) \min_{\pi} \sum_{i=1}^{N} \mathrm{CR}^i_{t+\Delta t}(\pi)$$

, to minimize the overall channel occupancy for all coordinated RSUs. $\pi$ is a configuration of the unicast sidelink between the RSUs and the trains.

Accordingly, in a next step S6, the calculated assistance information is provided by the application server AS to the RSU or train in concern.

Afterwards, in step S7, the subset of RSU perform DCC with the assistance information. In addition, if a time stamp indicates the assistance information is outdated, the RSU will again calculate and report CR, CBR and the previous steps will be repeated. Alternatively, the previous steps can be repeated based on external trigger, such as train mobility, or periodic update.

In view of above, the present invention proposes a method for predicting the decentralized congestion control (DCC) performance and providing assistance information to improve the overall system performance.

In addition, the present invention also proposes a system for controlling congestion of a private train network, which comprises a plurality of road side units RSU deployed along railway tracks and each connected to an application server, wherein each of said plurality of road side units RSU is adapted to establish communications with at least one train based on a wireless network and is adapted to make independent DCC decision, wherein the communications share a common sidelink resource pool, the system comprising:

- aggregation unit for aggregating congestion control information from a subset of said a plurality of road side units RSU and railway application information by the application server;

- prediction unit for predicting congestion status of each of the subset of said a plurality of road side units RSU by the application server based on the aggregated congestion control information and the railway application information;

- calculation unit for calculating and providing assistance information to the subset of said a plurality of road side units RSU by the application server based on the predicted congestion status;

wherein the subset of said a plurality of road side units RSU are configured to perform DCC based on the assistance information.

In particular, in this system according to the present invention, the following characteristics are configured:

• The plurality of road side units RSU make decentralized congestion control (DCC) based on its information;

• The application server receives periodically the CR and CBR information from the subset of the plurality of road side units RSU making their own DCC decision;

• The application server predicts the CR, CBR of each node by anticipating potential mobility and sidelink association strategy using: periodical CR and CBR information from the subset of road side units, traffic characteristics of the service flows which are sent from RSU to train; position and traffic/service information for each nodes; and position-based channel condition fingerprint database;

• According to the application server's prediction, the application server provides assistance information to each of the subset of road side units such that the DCC can be optimized by taking into account the global insight from application server;

• Each of the subset of the plurality of road side units will receive the assistance information and make final DCC decision.

Moreover, it is known to those skilled in the art, the aforementioned examples described above, according to the present invention, can be implemented in many ways, such as program instructions for execution by a processor, as software modules, microcode, as computer program product on computer readable media, as logic circuits, as application specific integrated circuits, as firmware, etc. The embodiments of the invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the embodiments of the invention can take the form of a computer program product accessible from a computer-usable or computer-readable medium providing program code for use by or in connection with a computer, processing device, or any instruction execution system. For the purposes of this description, a computer-usable or computer readable medium can be any apparatus that can contain, store, communicate, or transport the program for use by or in connection with the instruction execution system, apparatus, or device. The medium can be electronic, magnetic, optical, or a semiconductor system (or apparatus or device). Examples of a computer-readable medium include, but are not limited to, a semiconductor or solid state memory, magnetic tape, a removable computer diskette, a RAM, a read-only memory (ROM), a rigid magnetic disk, an optical disk, etc. Current examples of optical disks include compact disk-read-only memory (CD-ROM), compact disk-read/write (CD-R/W) and DVD.

The embodiments described hereinabove are illustrations of this invention. Various modifications can be made to them without leaving the scope of the invention which stems from the annexed claims.

**Claims**

1. A method for controlling congestion of a private train network, which comprises a plurality of road side units (RSU) deployed along railway tracks and each connected to an application server, wherein each of said plurality of road side units (RSU) is adapted to establish sidelink communications with at least one train based on a wireless network and is adapted to make independent Decentralized Congestion Control (DCC) decision, wherein the communications share a common sidelink resource pool and the communications in wireless network are based on sidelink communication in NR V2X mode 2 with PC5 interface, the method comprising:

     - aggregating congestion control information from a subset of said a plurality of road side units (RSU) and railway application information by the application server;
     - predicting congestion status of each of the subset of said a plurality of road side units (RSU) by the application server based on the aggregated congestion control information and the railway application information, wherein the predicted congestion status comprises prediction of sidelink Channel Busy Ratio (SL CBR) and/or sidelink Channel occupancy Ratio (SL CR) for the subset of said a plurality of road side units (RSU);
     - calculating and providing assistance information to the subset of said a plurality of road side units (RSU) by the application server based on the predicted congestion status; and
     - performing Decentralized Congestion Control (DCC) by the subset of said a plurality of road side units (RSU) based on the assistance information,

   wherein the assistance information relates to:

     - assisted transmission parameter modification for the subset of said a plurality of road side units (RSU);
     - assisted congestion parameter modification for the subset of said a plurality of road side units (RSU);
     - assisted sidelink dual connectivity; and/or
     - assisted sidelink unicast link management.

2. The method according to claim 1, wherein the congestion control information is sidelink Channel Busy Ratio (SL CBR) and/or sidelink Channel occupancy Ratio (SL CR).

3. The method according to claim 2, wherein the sidelink Channel occupancy Ratio is calculated based on a sliding window comprising 1000 slots or $1000 \cdot 2^{\mu}$ slots, and the sidelink Channel Busy Ratio is calculated based on a sliding window comprising 100 slots or $100 \cdot 2^{\mu}$ slots, wherein $\mu$ is a parameter for numerology with values in the following table:

| $\mu$ | subcarrier spacing $\Delta f = 15 \cdot 2^{\mu}$ kHz |
|---|---|
| 0 | 15 |
| 1 | 30 |
| 2 | 60 |
| 3 | 120 |
| 4 | 240 |

4. The method according to claim 1, wherein the subset of said a plurality of road side units (RSU) are chosen based on their signal power and/or geographic distance.

5. The method according to claim 1, wherein the railway application information is high layer information comprising:

   - traffic characteristics of service flows which are sent from the road side units (RSU) to the at least on train;
   - position information of the at least one train; and/or
   - position-based channel condition fingerprint database.

6. The method according to claim 5, wherein the traffic characteristics comprises packet delay budget, packet size, periodicity of the traffic, guaranteed flow bit rate, maximum flow bit rate, packet error rate, and/or priority level.

7. The method according to claim 5, wherein the position information comprises instantaneous position and/or instantaneous speed of the at least one train.

8. The method according to any one of claims 1 to 7, wherein before the step of aggregating congestion control information, the method further comprises:

   - selecting the subset of said a plurality of road side units (RSU);
   - calculating the congestion control information by the subset of said a plurality of road side units (RSU) and reporting the same to the application server.

9. The method according to any one of claims 1 to 8, wherein the assistance information comprises a time stamp, and the road side units (RSU) ignore the assistance information if the time stamp is outdated.

10. The method according to any one of claims 1 to 9, wherein the method further comprises providing the assistance information to the at least one train.

11. The method according to any one of claims 1 to 10, wherein the common sidelink resource pool is a resource pool of sidelink channel in both time and frequency domain.

12. A computer program comprising instructions which, when the program is executed by a computer, cause the computer to carry out the method of claim 1.

13. A system for controlling congestion of a private train network, which comprises a plurality of road side units (RSU) deployed along railway tracks and each connected to an application server, wherein each of said plurality of road side units (RSU) is adapted to establish communications with at least one train based on a wireless network and is adapted to make independent Decentralized Congestion Control (DCC) decision, wherein the communications share a common sidelink resource pool and the communications in wireless network are based on sidelink communication in NR V2X mode 2 with PC5 interface, the system comprising:

   - aggregation unit for aggregating congestion control information from a subset of said a plurality of road side units (RSU) and railway application information by the application server;
   - prediction unit for predicting congestion status of each of the subset of said a plurality of road side units (RSU) by the application server based on the aggregated congestion control information and the railway application information, , wherein the predicted congestion status comprises prediction of sidelink Channel Busy Ratio (SL CBR) and/or sidelink Channel occupancy Ratio (SL CR) for the subset of said a plurality of road side units (RSU);
   - calculation unit for calculating and providing assistance information to the subset of said a plurality of road side units (RSU) by the application server based on the predicted congestion status;
   wherein the subset of said a plurality of road side units (RSU) are configured to perform Decentralized Congestion Control (DCC) based on the assistance information;
   wherein the assistance information relates to:

      - assisted transmission parameter modification for the subset of said a plurality of road side units (RSU);
      - assisted congestion parameter modification for the subset of said a plurality of road side units (RSU);
      - assisted sidelink dual connectivity; and/or
      - assisted sidelink unicast link management..

**Patentansprüche**

1. Verfahren zum Steuern einer Überlastung eines privaten Zugnetzwerks, welches eine Mehrzahl straßenseitiger Einheiten (RSU) umfasst, welche entlang von Bahnstrecken eingesetzt sind und jeweils mit einem Anwendungsserver verbunden sind, wobei jede der Mehrzahl straßenseitiger Einheiten (RSU) dazu eingerichtet ist, Sidelink-Kommunikationen mit wenigstens einem Zug auf Grundlage eines drahtlosen Netzwerks zu schaffen und dazu eingerichtet ist, eine unabhängige Decentralized-Congestion-Control (DCC)-Entscheidung zu treffen, wobei die Kommunikationen einen gemeinsamen Sidelink-Ressourcenpool teilen und die Kommunikationen in einem drahtlosen Netzwerk auf einer Sidelink-Kommunikation in NR-V2X-Modus-2 mit einer PC5-Schnittstelle basieren, wobei das Verfahren umfasst:

   - Aggregieren von Überlastungssteuerungsinformationen von einem Untersatz der Mehrzahl straßenseitiger Einheiten (RSU) und von Bahnanwendungsinformationen durch den Anwendungsserver;
   - Vorhersagen eines Überlastungsstatus jeder des Untersatzes der Mehrzahl straßenseitiger Einheiten (RSU) durch den Anwendungsserver auf Grundlage der aggregierten Überlastungssteuerungsinformationen und der Bahnanwendungsinformationen, wobei der vorhegesagte Überlastungsstatus eine Vorhersage einer Sidelink-Channel-Busy-Ratio (SL CBR) und/oder einer Sidelink-Channel-Occupancy-Ratio (SL CR) für den Untersatz der Mehrzahl straßenseitiger Einheiten (RSU) umfasst;
   - Berechnen und Bereitstellen von Assistenzinformationen für den Untersatz der Mehrzahl straßenseitiger Einheiten (RSU) durch den Anwendungsserver auf Grundlage des vorhergesagten Überlastungsstatus; und
   - Durchführen einer Decentralized-Congestion-Control (DCC) durch den Untersatz der Mehrzahl straßenseitiger Einheiten (RSU) auf Grundlage der Assistenzinformationen,

   wobei sich die Assistenzinformationen auf folgendes beziehen:

   - eine assistierte Übertragungsparametermodifikation für den Untersatz der Mehrzahl straßenseitiger Einheiten (RSU);
   - eine assistierte Überlastungsparametermodifikation für den Untersatz der Mehrzahl straßenseitiger Einheiten (RSU);
   - eine assistierte Sidelink-Dual-Konnektivität; und/oder
   - eine assistierte Sidelink-Unicast-Link-Verwaltung.

2. Verfahren nach Anspruch 1, wobei die Überlastungssteuerungsinformationen eine Sidelink-Channel-Busy-Ratio (SL CBR) und/oder eine Sidelink-Channel-Occupancy-Ratio (SL CR) ist.

3. Verfahren nach Anspruch 2, wobei die Sidelink-Channel-Occupancy-Ratio auf Grundlage eines Gleitfensters, umfassend 1000 Slots oder $1000 \cdot 2^\mu$-Slots, berechnet wird und die Sidelink-Channel-Busy-Ratio auf Grundlage eines Gleitfensters, umfassend 100 Slots oder $100 \cdot 2^\mu$-Slots, berechnet wird, wobei $\mu$ ein Parameter für eine Numerologie mit Werten in der folgenden Tabelle ist:

| $\mu$ | Unterträgerabstand $\Delta f = 15 \cdot 2^\mu$ kHz |
|---|---|
| 0 | 15 |
| 1 | 30 |
| 2 | 60 |
| 3 | 120 |
| 4 | 240 |

4. Verfahren nach Anspruch 1, wobei der Untersatz der Mehrzahl straßenseitiger Einheiten (RSU) auf Grundlage ihrer Signalstärke und/oder geographischen Distanz ausgewählt werden.

5. Verfahren nach Anspruch 1, wobei die Bahnanwendungsinformationen Hoch-Ebene-Informationen sind, umfassend:

- Verkehrseigenschaften von Dienstströmen, welche von den straßenseitigen Einheiten (RSU) zu dem wenigstens einen Zug gesendet werden;
- Positionsinformationen des wenigstens einen Zuges; und/oder
- eine positionsbasierte Kanalzustand-Fingerabdruck-Datenbank.

6. Verfahren nach Anspruch 5, wobei die Verkehrseigenschaften ein Paketverzögerungsbudget, eine Paketgröße, eine Periodizität des Verkehrs, eine garantierte Strömungs-Bitrate, eine maximale Strömungs-Bitrate, eine Paketfehlerrate und/oder ein Prioritätslevel umfassen.

7. Verfahren nach Anspruch 5, wobei die Positionsinformationen eine momentane Position und/oder eine momentane Geschwindigkeit des wenigstens einen Zuges umfassen.

8. Verfahren nach einem der Ansprüche 1 bis 7, wobei vor dem Schritt des Aggregierens von Überlastungssteuerungsinformationen, das Verfahren ferner umfasst:

- Auswählen des Untersatzes der Mehrzahl straßenseitiger Einheiten (RSU);
- Berechnen der Überlastungssteuerungsinformationen durch den Untersatz der Mehrzahl straßenseitiger Einheiten (RSU) und Berichten derselben an den Anwendungsserver.

9. Verfahren nach einem der Ansprüche 1 bis 8, wobei die Assistenzinformationen einen Zeitstempel umfassen und die straßenseitigen Einheiten (RSU) die Assistenzinformationen ignorieren, wenn der Zeitstempel veraltet ist.

10. Verfahren nach einem der Ansprüche 1 bis 9, wobei das Verfahren ferner ein Bereitstellen der Assistenzinformationen an den wenigstens einen Zug umfasst.

11. Verfahren nach einem der Ansprüche 1 bis 10, wobei der gemeinsame Sidelink-Ressourcenpool ein Ressourcenpool eines Sidelink-Kanals sowohl in einer Zeit- als auch einer Frequenzdomäne ist.

12. Computerprogramm, umfassend Anweisungen, welche, wenn das Programm durch einen Computer ausgeführt wird, den Computer veranlassen, das Verfahren nach Anspruch 1 auszuführen.

13. System zum Steuern einer Überlastung eines privaten Zugnetzwerks, welches eine Mehrzahl straßenseitiger Einheiten (RSU) umfasst, welche entlang von Bahnstrecken eingesetzt sind und jeweils mit einem Anwendungsserver verbunden sind, wobei jede der Mehrzahl straßenseitiger Einheiten (RSU) dazu eingerichtet ist, Kommunikationen mit wenigstens einem Zug auf Grundlage eines drahtlosen Netzwerks zu schaffen und dazu eingerichtet ist, eine unabhängige Decentralized-Congestion-Control (DCC)-Entscheidung zu treffen, wobei die Kommunikationen einen gemeinsamen Sidelink-Ressourcenpool teilen und die Kommunikationen in einem drahtlosen Netzwerk auf einer Sidelink-Kommunikation in NR-V2X-Modus-2 mit einer PC5-Schnittstelle basieren, wobei das System umfasst:

- eine Aggregationseinheit zum Aggregieren von Überlastungssteuerungsinformationen von einem Untersatz der Mehrzahl straßenseitiger Einheiten (RSU) und von Bahnanwendungsinformationen durch den Anwendungsserver;
- eine Vorhersageeinheit zum Vorhersagen eines Überlastungsstatus jeder des Untersatzes der Mehrzahl straßenseitiger Einheiten (RSU) durch den Anwendungsserver auf Grundlage der aggregierten Überlastungssteuerungsinformationen und der Bahnanwendungsinformationen, wobei der vorhegesagte Überlastungsstatus eine Vorhersage einer Sidelink-Channel-Busy-Ratio (SL CBR) und/oder einer Sidelink-Channel-Occupancy-Ratio (SL CR) für den Untersatz der Mehrzahl straßenseitiger Einheiten (RSU) umfasst;
- eine Berechnungseinheit zum Berechnen und Bereitstellen von Assistenzinformationen für den Untersatz der Mehrzahl straßenseitiger Einheiten (RSU) durch den Anwendungsserver auf Grundlage des vorhergesagten Überlastungsstatus;
wobei der Untersatz der Mehrzahl straßenseitiger Einheiten (RSU) dazu eingerichtet ist, eine Decentralized-Congestion-Control (DCC) auf Grundlage der Assistenzinformationen durchzuführen;
wobei sich die Assistenzinformationen auf folgendes beziehen:

- eine assistierte Übertragungsparametermodifikation für den Untersatz der Mehrzahl straßenseitiger Einheiten (RSU);
- eine assistierte Überlastungsparametermodifikation für den Untersatz der Mehrzahl straßenseitiger Einheiten (RSU);

- eine assistierte Sidelink-Dual-Konnektivität; und/oder
- eine assistierte Sidelink-Unicast-Link-Verwaltung.

**Revendications**

1. Procédé de contrôle de congestion d'un réseau de train privé, qui comprend une pluralité d'unités de bord de voie (RSU) déployées le long de voies ferrées et connectées chacune à un serveur d'application, dans lequel chacune de ladite pluralité d'unités de bord de voie (RSU) est adaptée pour établir des communications de liaison latérale avec au moins un train sur la base d'un réseau sans fil et est adaptée pour prendre une décision indépendante de contrôle de congestion décentralisé (DCC), dans lequel les communications partagent un groupe de ressources de liaison latérale commun et les communications en réseau sans fil sont basées sur une communication de liaison latérale en mode 2 NR V2X avec interface PC5, le procédé comprenant :

- l'agrégation d'informations de contrôle de congestion à partir d'un sous-ensemble de ladite une pluralité d'unités de bord de voie (RSU) et d'informations d'application ferroviaire par le serveur d'application ;
- la prédiction d'un état de congestion de chacune du sous-ensemble de ladite une pluralité d'unités de bord de voie (RSU) par le serveur d'application sur la base des informations de contrôle de congestion agrégées et des informations d'application ferroviaire, dans lequel l'état de congestion prédit comprend une prédiction d'un taux de chargement de canal de liaison latérale (SL CBR) et/ou d'un taux d'occupation de canal de liaison latérale (SL CR) pour le sous-ensemble de ladite une pluralité d'unités de bord de voie (RSU) ;
- le calcul et la fourniture d'informations d'assistance au sous-ensemble de ladite une pluralité d'unités de bord de voie (RSU) par le serveur d'application sur la base de l'état de congestion prédit ; et
- la réalisation d'un contrôle de congestion décentralisé (DCC) par le sous-ensemble de ladite une pluralité d'unités de bord de voie (RSU) sur la base des informations d'assistance,

dans lequel les informations d'assistance concernent :

- une modification assistée de paramètres de transmission pour le sous-ensemble de ladite une pluralité d'unités de bord de voie (RSU) ;
- une modification assistée de paramètres de congestion pour le sous-ensemble de ladite une pluralité d'unités de bord de voie (RSU) ;
- une double connectivité de liaison latérale assistée ; et/ou
- une gestion de liaison de monodiffusion de liaison latérale assistée.

2. Procédé selon la revendication 1, dans lequel les informations de contrôle de congestion sont un taux de chargement de canal de liaison latérale (SL CBR) et/ou un taux d'occupation de canal de liaison latérale (SL CR).

3. Procédé selon la revendication 2, dans lequel le taux d'occupation de canal de liaison latérale est calculé sur la base d'une fenêtre coulissante comprenant 1000 créneaux ou $1000 \cdot 2^\mu$ créneaux, et le taux de chargement de canal de liaison latérale est calculé sur la base d'une fenêtre coulissante comprenant 100 créneaux ou $100 \cdot 2^\mu$ créneaux, dans lequel $\mu$ est un paramètre pour une numérologie avec des valeurs dans la table suivante :

| $\mu$ | espacement de sous-porteuse $\Delta f = 15*2^\mu$ kHz |
|---|---|
| 0 | 15 |
| 1 | 30 |
| 2 | 60 |
| 3 | 120 |
| 4 | 240 |

4. Procédé selon la revendication 1, dans lequel le sous-ensemble de ladite une pluralité d'unités de bord de voie (RSU) est choisi sur la base de leur puissance de signal et/ou distance géographique.

**5.** Procédé selon la revendication 1, dans lequel les informations d'application ferroviaire sont des informations de couche supérieure comprenant :

- des caractéristiques de trafic de flux de services qui sont envoyés des unités de bord de voie (RSU) à l'au moins un train ;
- des informations de position de l'au moins un train ; et/ou
- une base de données d'empreintes digitales de conditions de canal basées sur la position.

**6.** Procédé selon la revendication 5, dans lequel les caractéristiques de trafic comprennent un budget de retard de paquet, une taille de paquet, une périodicité du trafic, un débit binaire de flux garanti, un débit binaire de flux maximal, un taux d'erreurs sur les paquets, et/ou un niveau de priorité.

**7.** Procédé selon la revendication 5, dans lequel les informations de position comprennent une position instantanée et/ou une vitesse instantanée de l'au moins un train.

**8.** Procédé selon l'une quelconque des revendications 1 à 7, dans lequel, avant l'étape d'agrégation d'informations de contrôle de congestion, le procédé comprend en outre :

- la sélection du sous-ensemble de ladite une pluralité d'unités de bord de voie (RSU) ;
- le calcul des informations de contrôle de congestion par le sous-ensemble de ladite une pluralité d'unités de bord de voie (RSU) et le rapport de celles-ci au serveur d'application.

**9.** Procédé selon l'une quelconque des revendications 1 à 8, dans lequel les informations d'assistance comprennent un horodatage, et les unités de bord de voie (RSU) ignorent les informations d'assistance si l'horodatage est obsolète.

**10.** Procédé selon l'une quelconque des revendications 1 à 9, dans lequel le procédé comprend en outre la fourniture des informations d'assistance à l'au moins un train.

**11.** Procédé selon l'une quelconque des revendications 1 à 10, dans lequel le groupe de ressources de liaison latérale commun est un groupe de ressources de canal de liaison latérale à la fois dans le domaine temporel et fréquentiel.

**12.** Programme informatique comprenant des instructions qui, quand le programme est exécuté par un ordinateur, amènent l'ordinateur à réaliser le procédé selon la revendication 1.

**13.** Système de contrôle de congestion d'un réseau de train privé, qui comprend une pluralité d'unités de bord de voie (RSU) déployées le long de voies ferrées et connectées chacune à un serveur d'application, dans lequel chacune de ladite pluralité d'unités de bord de voie (RSU) est adaptée pour établir des communications avec au moins un train sur la base d'un réseau sans fil et est adaptée pour prendre une décision de indépendante de contrôle de congestion décentralisé (DCC), dans lequel les communications partagent un groupe de ressources de liaison latérale commun et les communications en réseau sans fil sont basées sur une communication de liaison latérale en mode 2 NR V2X avec interface PC5, le système comprenant :

- une unité d'agrégation pour l'agrégation d'informations de contrôle de congestion à partir d'un sous-ensemble de ladite une pluralité d'unités de bord de voie (RSU) et d'informations d'application ferroviaire par le serveur d'application ;
- une unité de prédiction pour la prédiction d'un état de congestion de chacune du sous-ensemble de ladite une pluralité d'unités de bord de voie (RSU) par le serveur d'application sur la base des informations de contrôle de congestion agrégées et des informations d'application ferroviaire, dans lequel l'état de congestion prédit comprend une prédiction d'un taux de chargement de canal de liaison latérale (SL CBR) et/ou d'un taux d'occupation de canal de liaison latérale (SL CR) pour le sous-ensemble de ladite une pluralité d'unités de bord de voie (RSU) ;
- une unité de calcul pour le calcul et la fourniture d'informations d'assistance au sous-ensemble de ladite une pluralité d'unités de bord de voie (RSU) par le serveur d'application sur la base de l'état de congestion prédit ;
dans lequel le sous-ensemble de ladite une pluralité d'unités de bord de voie (RSU) est configuré pour réaliser un contrôle de congestion décentralisé (DCC) sur la base des informations d'assistance,
dans lequel les informations d'assistance concernent :

- une modification assistée de paramètres de transmission pour le sous-ensemble de ladite une pluralité d'unités de bord de voie (RSU) ;
- une modification assistée de paramètres de congestion pour le sous-ensemble de ladite une pluralité d'unités de bord de voie (RSU) ;
- une double connectivité de liaison latérale assistée ; et/ou
- une gestion de liaison de monodiffusion de liaison latérale assistée.

Fig. 1

S1: SELECT A PLURALITY OF RSUS WHO WANT TO
COORDINATE THEIR DCC MEASURE

S2: RSU CALCULATE AND REPORT CR, CBR

EXTERNAL TRIGGER (TRAIN MOBILITY)
OR PERIODIC UPDATE

S3: APPLICATION SERVER RECEIVES THE CR AND CBR FROM MULTIPLE
RSUS, APPLICATION SERVER RETRIEVES TRAIN APPLICATION RELATED
INFORMATION INCLUDING: TRAFFIC CHARACTERISTICS OF THE SERVICE
FLOWS, TRAIN POSITION INFORMATION, POSITION-BASED CHANNEL
CONDITION FINGERPRINT DATABASE

S4: CONSIDER A PARTICULAR SIDELINK UNICAST LINK CONFIGURATION,
FOR THE RSUS APPLYING THIS CONFIGURATION, THE APPLICATION SERVER
PREDICTS THE CR AND CBR FOR THE RSUS APPLYING THIS CONFIGURATION

S5 : APPLICATION SERVER CALCULATES ASSISTANCE

S6 : APPLICATION SERVER PROVIDES ASSISTANCE
INFORMATION TO RSU OR TRAIN

S7: RSUS PERFORM DCC WITH ASSISTANCE INFORMATION

If the time stamp indicates the assistance is outdated

Fig. 2

1000 *slots*

Fig. 3

1000 *slots*

$\Delta t$

$\Delta t$

$t - 999$     $t + \Delta t$     $t$     $t + \Delta t$
                $-999$

Fig. 4

At time instance $T = t$:

**Train App. Server**

calculate and feedback their SL CR and SL CBR to train App. Server

RSU 1

RSU 2

Train 1

Train 2

Train 3

Fig. 5A

At time instance $T = t + t'$ :

$(t' < \Delta t)$

**Train App. Server**

RSU 1

RSU 2

Train 1

Train 2

Train 3

Fig. 5B

At time instance $T = t + \Delta t$ :

**Train App. Server**

RSU 1

RSU 2

Train 1

Train 2

Train 3

Fig. 5C

At time instance $T = t$:

**Train App. Server**

calculate and feedback their SL CR and SL
CBR to train App. Server

RSU 1

RSU 2

Train 1

Train 2

Train 3

Fig. 6A

At time instance $T = t + t'$ : **Train App. Server**

$(t' < \Delta t)$

RSU 1

RSU 2

Train 1

Train 2

Train 3

Fig. 6B

At time instance $T = t + \Delta t$ :

**Train App. Server**

RSU 1

RSU 2

Train 1

Train 2

Train 3

Fig. 6C

At time instance $T = t$:

**Train App. Server**

calculate and feedback their SL CR and SL CBR to train App. Server

RSU 1

Train 1

RSU 2

Receive power level

$t_1$

$t_2$

—— sidelink between RSU1 and train 1

- - - - sidelink between RSU2 and train 1

▨ Window of dual connectivity

$t$

$t_{switch}$   $t + \Delta t$   time

Fig. 7A

During $[t_1^*, t_2^*]$:

**Train App. Server**

Trigger dual connection establishment

RSU 1

Train 1

RSU 2

Fig. 7B

calculate and feedback their SL CR and SL
CBR to train App. Server

**Train App. Server**

RSU 1

Train 1

RSU 2

RSU 3

Fig. 8A

**Train App. Server**

Establish unicast sidelink during $[t, t_a]$,

Establish unicast sidelink during $[t_b, t + \Delta t]$

RSU 1

Train 1

RSU 2

Establish unicast sidelink during $[t_a, t_b]$

RSU 3

Fig. 8B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200359257 A1